# EUROPEAN PATENT APPLICATION

(11) **EP 0 802 134 A1**
(43) Date of publication of application: **22.10.1997**
(21) Application number: 97302585.1
(22) Date of filing: 16.04.1997
(51) Int. Cl.: B65G 47/90, B65B 5/06

(54) **Improvements in or relating to gripping devices**

(30) Priority: 20.04.1996 GB 9608251
(71) Applicant: ELOPAK SYSTEMS AG, 8152 Glattbrugg (CH)
(72) Inventor: Eknes, Tore, 3058 Solbergmoen (NO); Mundal, Dagfinn, 3017 Drammen (NO)
(74) Representative: Burrows, Anthony Gregory

(57) **Abstract**

A gripping device for gripping a fin of a gable-top carton whereof the fin may be in either of two orientations perpendicular to each other, comprises four jaws 9 distributed at intervals of a right-angle round a central location A, the jaws being fixed to the lower ends of levers 7 turnably mounted on respective horizontal pivot pins 8 mounted in a housing 5 of substantially square external peripheral cross-section. The levers 7 are turned by a common cam to displace the jaws 9 towards the central location A for gripping the fin, which extends through that location.

## Description

This invention relates to a gripping device and to a griphead comprised of a plurality of gripping devices.

Carrying trays for gable-top cartons and of the character disclosed in, for example, CH-A-646109 are well known.

A known griphead for loading such carrying tray, e.g. a so-called 10 tray, with gable-top cartons comprises, e.g., ten pairs of gripping jaws distributed in a 5x2 array, the jaws of each pair being displaceable towards and away from each other parallelly to the longer side of the array. The sealing fins of the top closures of the cartons must all be arranged parallelly to the shorter side of the array. However, when such filled trays are piled one upon another, a problem of lack of stability arises in that the fins can all be turned downwards in a common direction relative to the tray containing their cartons. It is known to overcome this problem by so placing the cartons in a tray that their sealing fins are arranged transversely to each other rather than parallelly to each other. However, another problem arises in that the known griphead referred to above cannot suitably grip such an arrangement of sealing fins. Instead, the array of cartons is itself gripped laterally and then loaded into the tray. However, the difficulties with such lateral gripping of the whole array are that, if the array is gripped too weakly, one or more of the cartons may drop out, followed by others, and that, if the array is gripped too strongly, cartons may be damaged, possibly to the extent of damaging their gas-tight seals, even causing their contents to leak out.

A similar griphead giving the same problem is known from GB-A-810795, wherein three spaced, gripper bars co-operate with respective rows of gripper fingers to clamp the sealing fins of an array of gable-top cartons between them and are displaced to load the cartons into cases.

JP-A-7-251932 discloses a bottle uncaser including a griphead including a horizontal support plate to which modular gripping devices in an array are releasably connected magnetically or by suction. DE-A-2716889 discloses a somewhat similar apparatus.

According to one aspect of the present invention, there is provided a gripping device for gripping a fin of a finned article whereof the fin may be in either of two orientations substantially perpendicular to each other, comprising gripping jaws arranged to grip the fin between them, and driving means arranged to drive the gripping jaws, characterized in that there are four said gripping jaws distributed round a central location at intervals, said jaws are displaceable towards and away from said central location for gripping said fin extending through said central location, and said driving means is arranged to displace said jaws towards and away from said central location.

Owing to the invention, the gripping device can grip securely the fin of the article, irrespective of which of the two orientations the fin has. Thereby, an array of such gripping devices can grip the fins of an array of such finned articles, irrespective of whether the fins are in a parallel pattern or a regular or irregular cross pattern.

Advantageously, as viewed axially of the central location, each jaw of the four is in the form of a quadrant, so that, with the four jaws displaced inwards and irrespective of which of the two orientations is occupied by the fin, the fin is securely gripped between two pairs of flat, gripping surfaces whereof the surfaces of each pair are parallel to each other. The jaws are preferably turnably mounted, so as to be turnable about respective axes at substantially a right-angle to each other and oblique to the gripping surfaces.

The four jaws of the gripping device are driven inwards by, for example, a common, reciprocatory cam, which reciprocates axially of the central location. Advantageously, the cam is driven by its own fluidic, i.e. pneumatic or hydraulic, piston-and-cylinder device. Outward return of the jaws may be accomplished by means of respective return springs.

Advantageously, the gripping device is in the form of a module individually connectible to a support common to an array of such gripping devices, so that it is possible to arrange the gripping devices in a relatively wide variety of arrays, for gripping a relatively wide variety of arrays of finned articles.

In order that the invention may be clearly understood and readily carried into effect, reference will now be made, by way of example, to the accompanying drawings, in which:-
Figure 1 shows a vertical, axial section through a modular gripping device for gripping a fin of a top closure of a gable-top carton, and also through a support for an array of such modular gripping devices, with the left-hand half- view showing the gripping device in a non-gripping condition and the right-hand half-view showing the gripping device in a gripping condition,

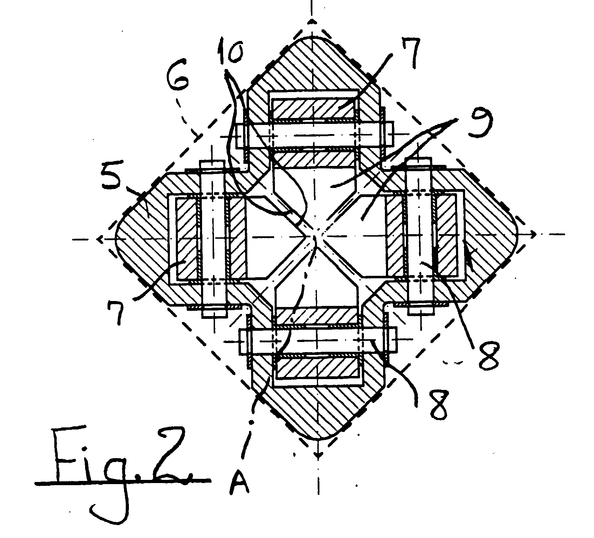

Figure 2 shows a section taken on the line II-II of Figure 1,

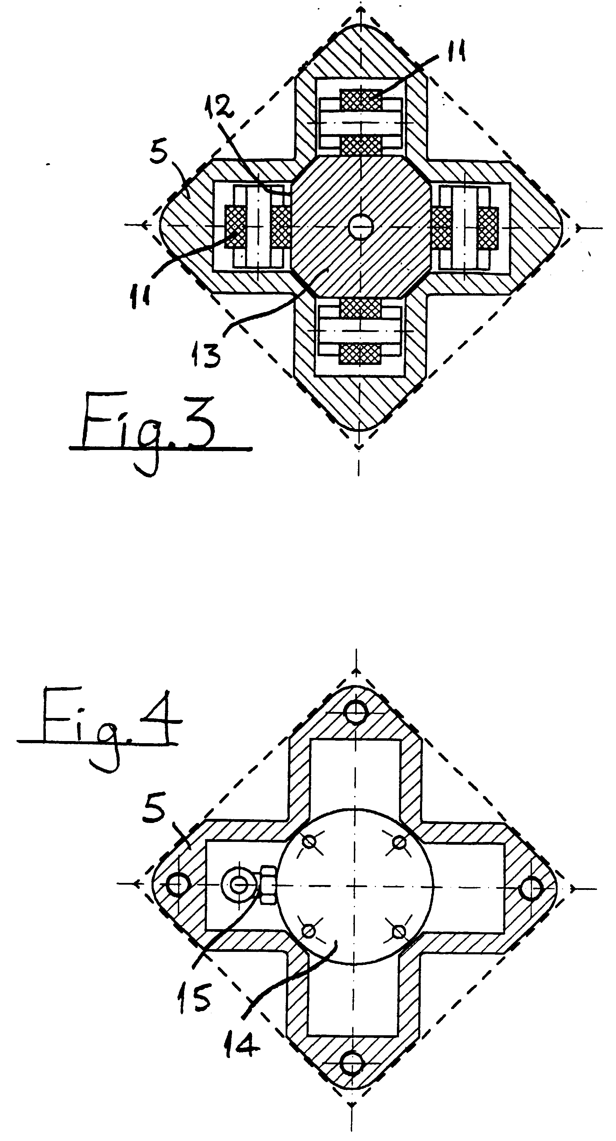

Figure 3 shows a section taken on the line III-III of Figure 1,
Figure 4 shows a section taken on the line IV-IV of Figure 1, and
Figure 5 is a horizontal section, corresponding to Figure 2, through a griphead comprised of the support and a 5x2 array of modular gripping devices in use loading gable-top cartons into a 10-tray, for example of the general character disclosed in CH-A-646109.

Referring to the drawings, the griphead 1 comprises a horizontal support 2 in the form of a plate and a 5x2 array 3 of modular gripping devices 4. The support 2 is driven (by means not shown) to manoeuvre the array 3 as required. Each device 4 includes a vertical housing 5 shaped and dimensioned to fit in a horizontal square 6 corresponding to the top plan outline of the exterior of a square, gable-top carton C. Distributed at angular intervals of 90° around the vertical axis A of each housing 5 are four, two-armed levers 7 which are mounted upon respective horizontal pivot pins 8 arranged at 45° to the sides of the square 6 and mounted in the housing 5. To the respective lower ends of the levers 7 are fixed gripping jaws 9 which, as viewed along the axis A, are in the form of respective quadrants with their gripping surfaces 10 substantially vertical. The jaws 9 have lead-in surfaces 10a for the gripping surfaces 10. The upper ends of the levers 7 take the form of respective forks in which are mounted respective roller followers 11 for co-operating with respective camming surfaces 12 of a block-form cam 13 coaxial with the axis A and reciprocable therealong by means of a fluidic, double-acting, piston-and-cylinder device 14 connected to fluidic supply and exhaust pipes 15. The camming surfaces 12 converge towards each other progressing downwardly. The housing 5 and the device 14 are fixed to the underneath of the support plate 2 by means of bolts 16 and 17, respectively.

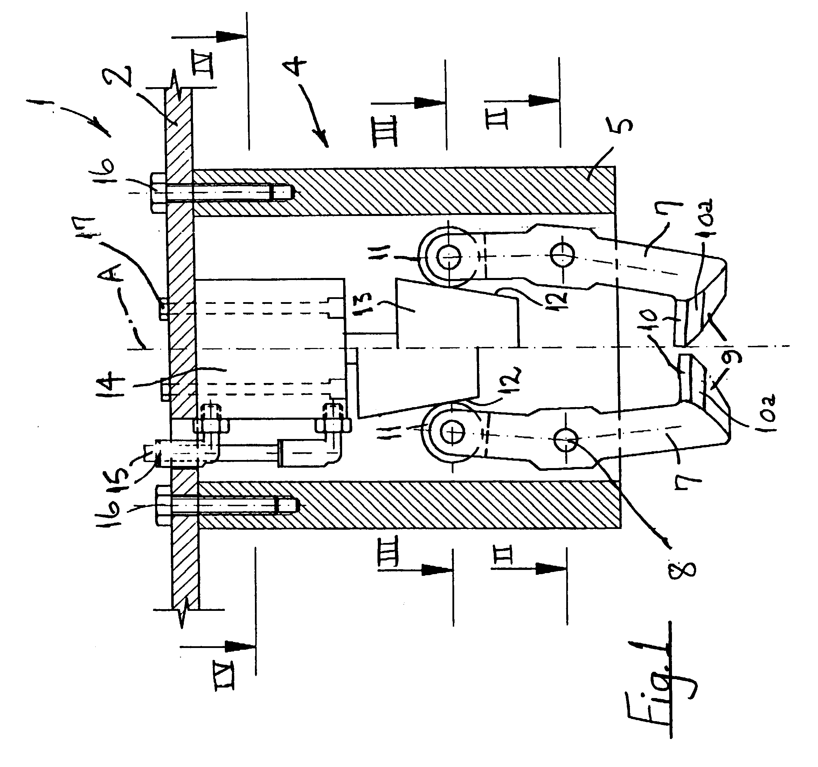

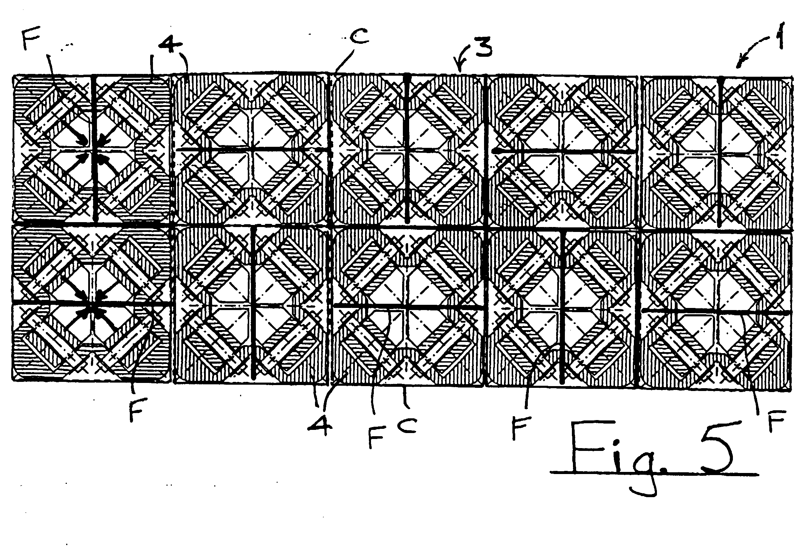

In use of the griphead 1, a 5x2 array of cartons C is assembled upon a supporting table (not seen), with the fins F of the cartons in each rank and file being regularly arranged with alternate fins orientated through 90° with respect to each other as seen in plan, as illustrated in Figure 5. Then, with the levers 7 in the non-gripping condition shown to the left-hand half of Figure 1, the griphead is lowered to the top of the carton array, the lead-in surfaces 10a ensuring that the fins F enter correctly between the relevant gripping surfaces 10. Then the devices 14 of the array 3 are operated to lower the cams 13 to cause the fins F to be gripped each between the jaws of the two pairs of jaws 9 of the corresponding gripping device 4. Thereafter, the support 2 is moved to transport the gripped array of cartons C to a 10-tray (not shown) and then lowered to lower the 5x2 carton array into the tray. Then the devices 14 are operated to raise the cams 13, so that return springs (not shown) bring the levers 7 back into their non-gripping conditions, whereupon the support 2 can be moved away back towards the carton-array supporting table to grip the next array of cartons.

It will be appreciated that the carton array can have its fins in a parallel pattern, or any desired variety of cross pattern, and yet the griphead 1 is still able to grip all of the cartons securely and transport them securely.

If the support plate 2 is formed with a suitable number of suitable bolt-holes in a suitable array over the plate 2, the griphead 1 can readily be adapted to suit any appropriate array of cartons C, by simply connecting to the plate 2 by means of the bolts 16 and 17, devices 4 in an appropriate number and array corresponding to that of the cartons C.

## Claims

1. A gripping device for gripping a fin (F) of a finned article (C) whereof the fin (F) may be in either of two orientations substantially perpendicular to each other, comprising gripping jaws (9) arranged to grip the fin (F) between them, and driving means (7,11,13,14) arranged to drive the gripping jaws (9), characterized in that there are four said gripping jaws (9) distributed round a central location at intervals, said jaws (9) are displaceable towards and away from said central location for gripping said fin (F) extending through said central location, and said driving means (7,11,13,14) is arranged to displace said jaws (9) towards and away from said central location.

2. A gripping device according to claim 1, wherein, as viewed axially of said central location, each jaw (9) of the four jaws (9) is in the form of a quadrant, so that, with the four jaws (9) displaced inwards and irrespective of which of the two orientations is occupied by the fin (F), the fin (F) is securely gripped between two pairs of gripping surfaces (10) of respective jaws (9) whereof the surfaces (10) of each pair are parallel to each other.

3. A gripping device according to claim 1 or 2, and further comprising mounting means (8) supporting said jaws (9) to be turnable relative to each about respective axes at substantially a right-angle to each other.

4. A gripping device according to claim 3, wherein said driving means (7,11,13,14) includes four levers (7) carrying the respective jaws (9) and turnably mounted on said mounting means (8).

5. A gripping device according to any preceding claim, wherein said driving means (7,11,13,14) comprises a reciprocatory cam (13) which drives the four jaws (9) inwards and which reciprocates axially of the central location.

6. A gripping device according to claim 5, wherein said driving means (7,11,13,14) comprises a driving unit (14) dedicated to said cam (13) for reciprocating said cam (13).

7. A gripping device according to claim 5 or 6, wherein said driving means (7,11,13,14) includes return spring means arranged to produce outward return of the jaws (9).

8. A gripping device according to any preceding claim, and further comprising a housing (5) of substantially rectangular external peripheral cross-section for inclusion in a compact array of gripping devices identical thereto and having their housings (5) arranged face-to-face with each other.

9. A gripping device according to any preceding claim, wherein said intervals are right-angles.

10. A gripping device according to claim 9 as appended to claim 8, wherein said housing (5) is of substantially square external peripheral cross-section.

11. A griphead comprising a support (2) and a plurality of modular gripping devices (4) arranged in an array on said support (2) and individually connected to said support (2), characterized in that each gripping device (4) is according to any preceding claim.
